# EUROPEAN PATENT SPECIFICATION

(11) **EP 0 767 816 B1**
(45) Date of publication and mention of the grant of the patent: **08.07.1998**
(21) Application number: 95918103.3
(22) Date of filing: 12.05.1995
(51) Int. Cl.: C09D 11/00, C09D 17/00, B01F 3/12

(54) **MAKING INK COMPOSITIONS**
HERSTELLUNG VON TINTENZUSAMMENSETZUNGEN
PREPARATION DE COMPOSITIONS D'ENCRES

(30) Priority: 27.06.1994 US 267039
(43) Date of publication of application: 16.04.1997
(73) Proprietor: VIDEOJET SYSTEMS INTERNATIONAL, INC., Wood Dale, Illinois 60191-673 (US)
(72) Inventor: LUSTENADER, Robert, Alan, Mundelein, IL 60060 (US); DRITLEIN, Donald, Kenneth, Niles, IL 60714 (US)
(74) Representative: McGowan, Nigel George
(86) International application number: GB9501083
(87) International publication number: WO9600261

(56) References cited:
- EP-A- 0 285 713
- US-A- 4 079 026
- US-A- 5 158 606

## Description

This invention relates to a method of making an ink composition.

In accordance with WO-A-93/23795, particles such as pigments, carbon black and magnetic particles are treated to form a dispersed product in an oil such as a vegetable oil. In accordance with that process, the pigment is dispersed at elevated temperature in the oil that also contains polymers and resins. The mixture is then cooled to solidify the components and is subsequently redispersed in vehicles, such as varnishes, with any requisite mixing, milling or the like that is necessary to form an acceptable ink. Because the cooled mixture, when solidified, was difficult to remove from the reaction vessel and difficult to further process, a need existed for a means to render that process more amenable to commercial production.

Additionally, there is a need for a method of making inks that can avoid the costly preparation steps that are usually required, such as the flushing process that is employed in the manufacture of ink using flushed pigments or carbon black dispersion.

Paste inks have traditionally been produced in either of two ways, (1) mixing predispersed or flushed pigment concentrates with vehicles, solvents, oils, and compounds, or (2) by mixing dry pigments or resin coated pigments with vehicles and compounds and then grinding them on ink mills. Flushes are made from a press cake that is comprised of a wetted pigment that is processed to remove water and add an oil. The flush can then be mixed with a vehicle such as a varnish to produce a final ink. A final filtration step may be used to remove any undispersed pigment agglomerates or other foreign substances

Mixing is done in various equipment, such as sigma-blade mixers, can mixers, and large agitated tanks. As color intensity is proportional to the degree of dispersion of the pigment, attempts have been made to provide improved mixing to achieve improved pigment dispersion. High speed mixers, such as saw-bladed or concentric, double-bladed dispersors have been used.

Milling of the pigment is usually done in three- or five-roll horizontal or vertical mills, and in shot or pin mills (both vertical and horizontal), or in ball mills or colloid mills. The three-roller mill is usually used for grinding viscous paste inks.

With dry pigment, the pigment is mixed with a varnish, causing agglomeration. To deagglomerate, it is necessary to use milling. When a three-roll mill is used, one to three passes must be made to achieve the desired degree of pigment dispersion. A five-roll mill can be used, but it is slower than a three-roll mill.

As an alternative, a pin mill has be used to deagglomerate the pigment. A pin mill has a shaft that moves, with pins on the shaft and correspondingly off-set to pins on the chamber wall. Between the pins are steel balls. Pigment is pumped from a tank into the mill on a semi-continuous basis. A gear pump is usually used to feed the pigment to the mill. The outer wall is cooled by use of recirculating water. Because some steel filament is entrained in the processed pigment, it is necessary to remove the same as by use of a magnetic filter. A series of filters is then usually used to remove larger-size pigment particles, such as bag filters, usually of nylon, or stainless steel basket filters. Pin mills are not as effective as three-roll mills, but they have a greater through-put.

A variation of the pin mill is the vertical mill that has a series of rotating discs that are spaced apart on a shaft. The discs move stainless steel balls between them. This mill also results in metal filaments in the pigment that must be removed, and also is incapable of handling highly viscous paste concentrates.

The horizontal mill uses steel or glass beads, with a higher speed of rotation. The deagglomeration that is achieved is not as good, so multiple passes are usually required.

For all of the mills discussed above, except for the three- and five-roll mill, the pigment is fed to the mill by means of a gear pump.

None of the foregoing equipment has, however, provided the requisite dispersion of pigment, carbon black, or the like in ink formulations, to achieve the maximum intensity of ink for a given concentration of dispersed particle.

High intensity mixing machines that provide high sheer mixing and concurrent extrusion have been known for many, many years. For example, U.S. Patent Nos. 3,490,750 and 3,618,902 both relate to such machines. The use of such machines has, however, been mainly limited to use in mixing, kneading, blending or reacting materials described as "fluid, plastic, granular or powdered form." Additionally, such apparatus has been used to mix and compound plastic masses, including rubber, vinyl and polyethylene plastics, linoleum and cellulose compounds.

US-A-4079026 discloses printing inks and particularly fluorescent colored inks which provide outstanding color strength and dot resolution with planographic and letterpress printing processes. The inks comprise an intimate dispersion of colored resin particles in a vehicle containing specified amounts of certain alkyd resins, esters of modified rosin, carboxylated hydrocarbon resins and ink oil.

The present invention provides a continuous method for dispersing particles (which may be magnetic particles, pigments (organic and inorganic), or carbon black) in a carrier. The invention also provides a method for continuously encapsulating such particles, while avoiding the use of organic solvents. Further, the invention provides a method for making inks directly from dispersions of particles in oil without the need to form a solid intermediate, thus avoiding the handling problems associated with such a solid material.

The products of this invention are suitable for use in magnetic printing inks, as well as for other magnetic recording systems, such as audio and video tapes, magnetic storage disks, and other magnetic storage and readable systems.

The present invention also provides inks, such as those used in lithographic (direct and offset), letterpress, gravure, flexographic, silk-screen, and mimeograph printing processes, or radiation curable inks, such as infrared and ultraviolet curable inks and electron-beam inks, which are also known as E.B. inks.

There is also provided a continuous method for making a printing ink, such as a lithographic printing ink, comprising a (lithographic) printing ink vehicle and from about 1 to about 99 percent, typically about 1 to about 90 percent, of dispersed particles (which may be magnetic particles, pigments, or carbon black), based on the total weight of the ink. Optionally, said ink is free of volatile organic solvents. Most preferably, the vehicle contains a vegetable oil, such as soya oil, or a derivative thereof.

In one aspect of the present invention, an improved dispersion of particles (which may be magnetic particles, colored pigments, or carbon black) in a liquid carrier is formed by continuously subjecting said dispersion to high sheer forces to deagglomerate the particles, while concurrently extruding the dispersion from regions of high pressure to regions of lower pressure, until a dispersion is obtained that has a narrow distribution of particle sizes, with the particles being uniformly distributed throughout the carrier.

In one particular application of the foregoing, the present invention provides a method for making a dispersion in an oil-based carrier, said dispersion comprising particles selected from the group consisting of magnetic particles, pigments, and carbon black, having a particle diameter from about 0.04 to about 100 microns, said method comprising first forming a melt comprising an oil and a particle surface modifier, then forming a dispersion by continuously supplying said melt and said particles, at a predetermined weight ratio, to a first region of a mixing chamber wherein said melt is maintained as a fluid at an elevated temperature. Said dispersion is then continuously subjected to high sheer forces to deagglomerate the particles, while concurrently extruding the dispersion from regions of high pressure to regions of lower pressure, until a dispersion is obtained that has a narrow distribution of particle sizes, with the particles being uniformly distributed throughout the carrier.

In another embodiment of the foregoing, the present invention provides a method for making a dispersion in a liquid carrier, said dispersion comprising particles selected from the grout consisting of magnetic particles, pigments, and carbon black, having a particle diameter from about 0.04 to about 100 microns, said method comprising first forming a solution, suspension or emulsion of a carrier and a particle surface modifier, then forming a dispersion of said particles in said carrier by continuously supplying said solution, suspension or emulsion and said particles, at a predetermined weight ratio, to a first region of a mixing chamber. Said dispersion is then continuously subjected to high sheer forces to deagglomerate the particles, while concurrently extruding the dispersion from regions of high pressure to regions of lower pressure, until a dispersion is obtained that has a narrow distribution of particle sizes, with the particles being uniformly distributed throughout the carrier. An ink can then be made directly, after such a dispersion is formed. The dispersion is maintained in a fluid state while being fed to a second region of said mixing chamber. A suitable ink vehicle is then continuously added to said dispersion without allowing said dispersion to solidify, followed by mixing the dispersion and the vehicle for a sufficient time to form the desired ink. In one aspect, said ink is free of volatile organic solvents. Usually the carrier is present in an amount from about 10 to about 90 percent, based on the total weight of the particles.

A continuous method for dispersing particles (which may be magnetic particles, pigments, or carbon black) is also provided. The method comprises dispersing the desired particles in a heated medium that comprises an oil and any additional components, optionally without the presence of any volatile organic solvent, and after forming such a dispersion, continuously adding a suitable ink vehicle to said dispersion to form the desired ink, without the need to form a solid intermediate after the dispersion of particles in the ink is formed.

In a specific embodiment, the method comprises forming a melt comprising a particle surface modifier, optionally an ionomer, an oil and resinous material, dispersing said particles in said melt, said melt optionally being free of volatile organic solvents and said melt being present in an amount from about 10 to about 80 percent, based on the total weight of the encapsulated product. The melt may also comprise a particle surface modifier, and/or a binder resin.

In a more specific embodiment, the melt will comprise an oil, such as a vegetable oil, preferably soya oil, and resinous material.

The present invention also provides a dispersion of particles, such as carbon black, magnetic particles or organic or inorganic pigment, in a carrier wherein the dispersion is characterized in that said particles have a particle size distribution that is very narrow with a mean particle grouping slightly above the individual particle size, with a high percentage of the particle groupings typically being in a single size. Such dispersion can be used to make improved inks. Thus the present invention also provides an improved ink comprising a dispersion of particles in a liquid vehicle wherein the improvement comprises said particles having such a narrow particle size distribution.

The invention will now be further described by way of example with reference to the accompanying drawings, in which:-
Fig. 1 is a schematic diagram of equipment used to perform the method of the present invention;
Fig. 2 is a transverse cross-section of a preferred mixer used to perform the method of the present invention; and
Fig. 3 is a cross-section of a portion of the preferred mixer used to perform the method of the present invention.

### THE OIL

The oil may be any suitable hydrocarbon that will act as a good dispersion medium in its heated state. In one embodiment, the oil is preferably a vegetable oil, especially soya oil. Other suitable oils include linseed oil or any other vegetable oil (cotton seed, china wood, and the like). Common derivatives of such oils, such as wholly or partially hydrogenated oils or derivatives of such oil may be used. Both raw and treated oils are applicable to the current invention.

In another embodiment, the oil may be a naphthenic oil to which a polyunsaturated component, such as oleic acid, has been added. Usually the unsaturated component will be present in an amount from about 30 to about 50 percent, based on the weight of the naphthenic oil, typically in an amount of about 10 percent.

### Aqueous Solutions and Emulsions

For those applications in which the particles are to be used in a generally hydrophilic environment, such as aqueous based inks, the surface of the pigment should usually be rendered hydrophilic, by use of a hydrophilic surface modifier, as discussed below. It is in those instances, then, that the dispersion of the particles will usually be done in an aqueous environment. Water, alone, may be used, or in conjunction with a cosolvent, usually one that is miscible with the water.

In some instances it is desirable to disperse the particles in a medium that contains an aqueous phase, such as an oil-in-water emulsion or a water-in-oil emulsion. In such instances the dispersing medium may comprise water and an organic solvent that is immiscible with the water. Any typical emulsifier may be used to achieve such an emulsion. In some instances the emulsion may be a microemulsion, all depending upon the nature of the surface modifier and the dispersion medium that is chosen for a particular application.

### The Particle Surface Modifier

The particle surface modifier may be any agent or mixture of agents. Preferably it is a polymeric component, that is solid at 25°C but will melt without degrading at a temperature of about 150°C, or lower. When the pigment is for use in an oil-based or hydrophobic vehicle, preferably the particle surface modifier, will impart hydrophobicity to the pigment particles as well as thixotropic properties when the particles are used, as in a magnetic offset printing ink. For such applications, preferably the particle surface modifier is a polyethylene, most preferably an oxidized polyethylene homopolymer. Other useful particle surface modifiers include other polyolefins, which may also be modified to have surface active groups such as hydroxyl, carboxyl, amino, ammonium, or nitro groups, or the like.

Most preferably for hydrophobic applications, the particle surface modifier will have an acid value from about 6 to about 120 and will have the similar acid number as for the binder. Useful particle surface modifiers include those available from Allied Signal under the trademarks A-C 316, 316A, 325, 330, 392, 395, 395A, 629, 629A, 655, 656, 680 and 6702, especially A-C 629A.

Other useful particle surface modifiers include other polyolefins, acrylic polymers, polyesters and urethane polymers, and the like, as well as copolymers, and graft polymers of the aforementioned, all of which may also be modified to have surface active groups such as hydroxyl, carboxyl, amino, ammonium, or nitro groups, or the like. Polyvinyl alcohols and acetates are typical examples of such polymers that may be used for such purposes. By using polymers that contain functional groups, it is possible to obtain a chemical bonding between the polymer and the surface of particles that contain complimentary, reactive groups. Polymers with different reactive groups can be used to react with different reactive groups on the surface of the particles.

Useful monomers and comonomers include vinyl monomers, acrylic monomers, allylic monomers, acrylamide monomers, and mono- and dicarboxylic unsaturated acids. Vinyl esters include vinyl acetate, vinyl propionate, vinyl butyrates, vinyl benzoates, vinyl isopropyl acetates and similar vinyl esters. Vinyl halides include vinyl chloride, vinyl fluoride, and vinylidene chloride. Vinyl aromatic hydrocarbons include styrene, methyl styrenes and similar lower alkyl styrenes, chlorostyrene, vinyl toluene, vinyl naphthalene, divinyl benzoate, and cyclohexene. Vinyl aliphatic hydrocarbon monomers include alpha olefins such as ethylene, propylene, isobutylene, and cyclohexene as well as conjugated dienes such as 1,3 butadiene, methyl-2-butadiene, 1,3-piperylene, 2,3 dimethyl butadiene, isoprene, cyclopentadiene, and dicyolopentadiene. Vinyl alkyl ethers include methyl vinyl ether, isopropyl vinyl ether, n-butyl vinyl ether, and isobutyl vinyl ether. Acrylic monomers include monomers such as lower alkyl esters of acrylic or methacrylic acid having an alkyl ester portion containing between 1 to 12 carbon atoms as well as aromatic derivatives of acrylic and methacrylic acid. Useful acrylic monomer include, for example, acrylic and methacrylic acid, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecylacrylate and methacrylate, benzyl acrylate and methacrylate, and various reaction products such as butyl, phenyl and cresyl glycidyl ethers reacted with acrylic and methacrylic acids, hydroxyl alkyl acrylates and methacrylates such as hydroxyethyl and hydroxypropyl acrylates and methacrylates, as well as amino acrylates and methacrylates.

Polyester polymers and copolymers comprise the esterification products of glycols, diols, or polyols with excess equivalents of dicarboxylic acid or polycarboxylic acids. Linear aliphatic glycols are esterified with greater molar amounts of aromatic dicarboxylic acid and/or linear saturated dicarboxylic acid having between 2 and 36 linear carbon atoms such as adipic, azelaic, succinic, glutaric, pimelic, suberic or sebacic acid to produce low molecular weight polyesters.

In general, the surface modifier may be any of the polymers that may be used as the backbone for an ionomer, as discussed in the corresponding section below and the discussion of such useful ionomer backbone polymers and the components used to make and modify the same is incorporated in this section by reference.

It is believed that low molecular weight polymers are preferable in most instances. If the chain length of the polymer is too long, it is possible that the polymer will interact chemically or physically with more than one particle, thus causing undesired agglomeration of the particles. Accordingly, for example, a molecular weight of only about 100 may be used up to about 50,000, usually up to about 20,000, typically up to about 10,000, and more typically up to about 5,000, at least when oxidized polyethylene is used as the surface modifying agent. The molecular weight used can vary, of course, depending upon the particular components used in the formulation.

### THE BINDER RESIN

The binder resin may be any agent. Preferably it is a polymeric component that is solid at 25°C but will melt without degrading at a temperature of about 150°C, or lower. The binder resin is preferably a maleic modified rosin ester (trademark Beckacite 4503 resin from Arizona chemical company). Other useful binder resins include phenolics, maleics, modified phenolics, rosin ester, and modified rosin, phenolic modified ester resins, rosin modified hydrocarbon resins, hydrocarbon resins, terpene phenolic resins, terpene modified hydrocarbon resins, polyamide resins, tall oil rosins, rosin ester resins, polyterpene resins, hydrocarbon modified terpene resins, acrylic and acrylic modified resins and similar resins or rosin known to be used in printing inks, coatings and paints.

### THE PIGMENTS

The pigments that are of use in the present invention include but are not limited to the following:
Metallized Azo Reds: Red 49:1 (Barium salt), Red 49:2 (Calcium salt), Red 63:1 (Calcium salt)
Toluidine reds
Naphthol reds
Pyrazolones
Rhodamines
Quiacridones: Red B, Red Y, Magenta B, Magenta and violet
Phthalocyanine blues
Phthalocyanine greens
Carbazole violets
Monoarylide Yellow
Diarylide Yellow
Chrome yellow
Red Lake C
Lithol reds: calcium and barium salts
Lithol rubine
Bon Maroon
Perylene pigments
Red 2B: Calcium, Barium and Magnesium salts
Chrome Yellow
Chrome Orange
Molybdate orange
Orange 36, Diarylide orange, Dianisidine orange, tolyl orange and Dinitraniline orange

Such pigments may have a wide range of particle sizes, as from about 0.04 µm to about 100 µm, preferably from about 0.1 µm to about 5 µm, and more preferably from 0.2 to 2 µm.

### THE METAL PARTICLES

The magnetic metal particles of use in the present invention are usually iron oxide, such as cubic iron oxide, acicular iron oxide, gamma-Fe₂O₃, and mixed crystals of gamma-Fe₂O₃ and Fe₃O₄. The particles also may be, however, Cr₂O₂, gamma Fe₂O₃ or Fe₃O₄ coated with cobalt, barium ferrite, iron carbide, pure iron, and ferromagnetic alloy powders such as Fe-Co and Fe-Co-Ni alloys. The particle size should be from about 0.04 microns to about 100 microns, typically from about 0.1 to about 5 microns, preferably from about 0.2 to about 2 micron.

A preferred metal particle is Type 031182 magnetic pigment from Wright Industries, Inc., Brooklyn, New York having a particle size of 0.7 microns.

### THE IONOMERIC COMPONENT

As indicated, in one aspect of the present invention, an ionomeric composition is employed. The ionomeric composition contains ionomers that have a melting point of at least about 70° C. The ionomers are useful in obtaining some functional properties of inks made with the encapsulated particles.

Typically, ionomers contain a certain number of inorganic salt groups attached to a polymer chain, such as up to 15 mol % ionic groups pendant to a base polymer, such as a hydrocarbon or perfluorinated polymer chain.

The pendant ionic groups interact to form ion-rich aggregates contained in a nonpolar polymer matrix. The resulting ionic interactions strongly influence polymer properties and application. The salt groups chemically combined with a nonpolar polymer backbone have a dramatic influence on polymer properties not observed with conventional homopolymers or with copolymers based on nonionic species. The ionic groups interact or associate to form ion-rich regions in the polymer matrix.

The ionic interactions and resultant polymer properties are dependent on the type of polymer backbone (plastic or elastomer); ionic functionality (ionic content), generally 0-15%; type of ionic moiety (carboxylate, sulfonate, or phosphonate); degree of neutralization (0-100%); and type of cation (amine, metal, monovalent, or multivalent).

An ionomer can be defined as a polymer composed of a polymeric backbone containing a small amount of pendant carboxylic acid sulfonate or phosphate groups, usually less than 15 mole percent, which are neutralized, partially or completely, to form an ionomer. Ionic hydrocarbon polymers for elastomers or plastics are disclosed in U.S. Patent No. 3,264,272.

Ionomers may be prepared by copolymerization of a functionalized monomer with an olefinic unsaturated monomer or direct functionalization of a preformed polymer. Typically, carboxyl-containing ionomers are obtained by direct copolymerization of acrylic or methacrylic acid with ethylene, styrene, and similar comonomers by free-radical copolymerization. The resulting copolymer is generally available as the free acid, which can be neutralized to the degree desired with metal hydroxides, acetates, and similar salts.

Another route to ionomers involves modification of a preformed polymer. Sulfonation of polystyrene, for example, permits the preparation of sulfonated polystyrene (S-PS) with a content of sulfonic acid groups in proportion to the amount of sulfonating agent. Such reactions may be conducted in homogeneous solutions, permitting the direct neutralization of the acid functionality to the desired level. The neutralized ionomer may be isolated by conventional techniques, i.e., coagulation in a non-solvent, solvent flashing, etc.

Useful ionomers include:

| | |
|---|---|
| poly(ethylene-co-acrylic acid) | Aclyn® |
| poly(ethylene-co-methacrylic acid) | Surlyn® |
| poly(butadiene-co-acrylic acid) | Hycar® |
| perfluorosulfonate ionomers | Nafion® |
| perfluorocarboxylate ionomers | Flemion® |
| telechelic polybutadiene | Hycar® |
| sulfonated ethylene-propylene terpolymer | Ionic Elastomer® |
| poly(styrene-co-acrylic acid) | |
| sulfonated polystyrene | |
| sulfonated cetyl elastomer | |
| sulfonated polypentenamer | |

Ionomers of use in the present invention may be made by first forming a functional polymer. Useful polymers include acrylic copolymers, polyester-acrylic graft copolymers, polyester polymers and urethane polymers.

Useful acrylic copolymers are carboxyl functional acrylic copolymers which can be produced by polymerizing monomers in bulk, in an organic solvent, or by other suitable processes to produce carboxylic functional polymer. The carboxylic acid functional acrylic copolymer comprises copolymerized ethylenically unsaturated monomers, including ionizable carboxyl monomers, to produce a copolymer containing reactive primary carboxylic acid groups and having a number average molecular weight between 500 and 100,000, and preferably between 1,000 and 40,000. Number average molecular weights are typically measured by GPC according to ASTM methods such as D3016-72; D3536-76; D3593-80; or D3016-78.

The acrylic copolymers have a Tg between 20° C. and 100° C. as calculated by the FOX equation based on the weight ratio of specific monomers. The Acid No. of the carboxylic acid functional polymer is between 10 and 200 and preferably is between 30 and 90. The copolymers can be produced by bulk, solvent, or suspension polymerization of ethylenically unsaturated monomers including carboxylic acid monomers, activated by peroxide or azo or other free radical initiator at polymerization temperatures typically between 40° C. to 170° C. and preferably between 70° C. to 150° C. Typically 0.2% to 5% peroxide initiator is utilized based on the weight of the monomers. Typical polymerization initiators can include for instance benzoyl peroxide, t-butyl hydroperoxide, tertiary butyl perbenzoate, cumene peroxide and similar peroxide polymerization catalysts which are preferred. Other initiators include azo initiators such as azobisisobutyronitrile and persulfate or ammonium persulfates. Molecular weight control can be achieved by adjusting temperature, initiator level, or by the addition of chain transfer agents, such as the common mercaptans.

Typical solvents useful in preparing the organic solvent-borne acrylic copolymers can include for instance, xylene, toluene, ethyl acetate, acetone, methylisobutyl ketone, methyl n-amyl ketone, methylisoamyl ketone, ethylamyl ketone, amyl acetone, methylethyl ketone, ethyl alcohol, mineral spirits, ethylene glycol monoethyl ether acetate, and other aliphatic, cycloaliphatic and aromatic hydrocarbons, esters, ethers, ketones and alcohols. After the polymerization is completed, the solvents may be stripped off to produce a solid polymer for use in a powder coating.

Copolymerizable ethylenically unsaturated monomers useful in producing the carboxylic acid functional acrylic copolymer are monomers containing carbon-to-carbon, ethylenic unsaturation and include vinyl monomers, acrylic monomers, allylic monomers, acrylamide monomers, and mono- and dicarboxylic unsaturated acids. Vinyl esters include vinyl acetate, vinyl propionate, vinyl butyrates, vinyl benzoates, vinyl isopropyl acetates and similar vinyl esters. Vinyl halides include vinyl chloride, vinyl fluoride, and vinylidene chloride. Vinyl aromatic hydrocarbons include styrene, methyl styrenes and similar lower alkyl styrenes, chlorostyrene, vinyl toluene, vinyl naphthalene, divinyl benzoate, and cyclohexene. Vinyl aliphatic hydrocarbon monomers include alpha olefins such as ethylene, propylene, isobutylene, and cyclohexene as well as conjugated dienes such as 1,3 butadiene, methyl-2-butadiene, 1,3-piperylene, 2,3 dimethyl butadiene, isoprene, cyclopentadiene, and dicyolopentadiene. Vinyl alkyl ethers include methyl vinyl ether, isopropyl vinyl ether, n-butyl vinyl ether, and isobutyl vinyl ether. Acrylic monomers include monomers such as lower alkyl esters of acrylic or methacrylic acid having an alkyl ester portion containing between 1 to 12 carbon atoms as well as aromatic derivatives of acrylic and methacrylic acid. Useful acrylic monomer include, for example, acrylic and methacrylic acid, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecylacrylate and methacrylate, benzyl acrylate and methacrylate, and various reaction products such as butyl, phenyl and cresyl glycidyl ethers reacted with acrylic and methacrylic acids, hydroxyl alkyl acrylates and methacrylates such as hydroxyethyl and hydroxypropyl acrylates and methacrylates, as well as amino acrylates and methacrylates.

The carboxylic acid functional polymer comprises copolymerized monomers including at least 1% by weight ionizable carboxylic acid monomer which include acrylic and methacrylic acids as well as olefinic unsaturated acids. Acrylic acids include acrylic and methacrylic acid, ethacrylic acid, alpha-chloracrylic acids, alpha-cyanoacrylic acid, crotonic acid, and beta-acryloxy propionic acid. Olefinic unsaturated acids include fumaric acid, maleic acid or anhydride, itaconic acid, citraconic acid, mesaconic acid, muconic acid, glutaconic acid, aconitic acid, hydrosorbic acid, sorbic acid, alpha-chlorosorbic acid, cinnamic acid, and hydromuconic acid. On a weight basis, the carboxylic acid functional polymer contains at least 1% copolymerized carboxyl functional monomers and preferably between 5% and 15% carboxylic acid monomers.

Polyester polymers comprise the esterification products of glycols, diols, or polyols with excess equivalents of dicarboxylic acid or polycarboxylic acids. Linear aliphatic glycols are esterified with greater molar amounts of aromatic dicarboxylic acid and/or linear saturated dicarboxylic acid having between 2 and 36 linear carbon atoms such as adipic, azelaic, succinic, glutaric, pimelic, suberic or sebacic acid to produce low molecular weight polyesters. Commercially available linear saturated dicarboxylic acids are dodecanedioic acid, dimer fatty acids, or azelaic acid. Aromatic dicarboxylic acids (anhydrides) include phthalic, isophthalic, terephthalic, and tetrahydrophthalic. Minor amounts of polyfunctional acids such as trimelletic acids can be added. Suitable glycols include linear aliphatic glycols having 2 to 16 carbon atoms such as 1,3- or 1,4-butylene glycol, 1,6-hexane diol, neopentyl glycol, propylene glycol, ethylene glycol and diethylene glycol, propylene, and dipropylene glycol, and similar linear glycols, hydrogenated Bisphenol A. Minor amounts of polyols can be used such as glycerol, pentaerythritol, dipentaerythritol, or trimethylol ethane or propane. The molar deficiency of the glycol over the greater molar amounts of aromatic and linear saturated dicarboxylic acid is between about 1% and 50%. Hence, the polyester may contain an excess of unreacted carboxylic groups to provide a carboxyl polyester having an Acid No. between 5 and 300. The molecular weight of useful polyester polymers are between 500 and 50,000 and preferably between 1,000 and 10,000. Glycol can be esterified with minor amounts of up to about 20% by weight of unsaturated dicarboxylic acids (anhydrides) including maleic, fumaric or itaconic acids; or monocarboxylic acids such as acetic, benzoic, and higher chain aliphatic acids up to about 12 carbon atoms as well as aromatic acids. The polyester component can be produced by solvent or bulk polymerization although bulk polymerization is preferred. The raw materials can be charged in bulk and esterification polymerized at temperatures typically between 170° C. to 240° C. although moderately higher or lower temperatures can be utilized satisfactorily. Azeotropic removal of water with a suitable solvent, such as xylene, often helps to reduce processing times. An esterification catalyst can be used, typically at less than 1% levels based on charge, such as an organic tin compound.

Grafted copolymers of polyester and acrylics can be produced by free-radical polymerization of ethylenically unsaturated monomers, including acrylic and carboxyl monomers, in the presence of a preformed molten or fluid polyester at temperatures sufficient to induce addition copolymerization of the monomers along with some grafting onto the polyester backbone. Organic solvents are not required, but can be added if desired to provide desired viscosity in solvent coatings. On a weight basis, the polyester-acrylic graft polymer may contain between 5% and 90% polyester polymer component with the balance being the acrylic polymer component. The polyester component of the polyester acrylic graft polymer is a moderate molecular weight polymer having a number average molecular weight between about 500 and 50,000 and preferably between 1,000 and 5,000. The polyester polymer should have an Acid No. above about 5, preferably between 20 and 100, and can be prepared as previously described.

The acrylic polymer component of the polyester-acrylic graft polymer comprises in-situ copolymerized ethylenically unsaturated monomers, including acrylic monomers and carboxyl monomers, along with other ethylenically unsaturated monomers if desired. Acrylic monomers include monomers such as lower alkyl esters of acrylic or methacrylic acid having an alkyl ester portion containing between 1 to 12 carbon atoms as well as aromatic derivatives of acrylic and methacrylic acid. Useful acrylic monomers include, for example, acrylic and methacrylic acid, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecylacrylate and methacrylate, benzyl acrylate and methacrylate, and various reaction products such as butyl, phenyl, and cresyl glycidyl ethers reacted with acrylic and methacrylic acids, hydroxyl alkyl acrylates and methacrylates such as hydroxyethyl and hydroxypropyl acrylates and methacrylates, as well as amino acrylates and methacrylates. Acrylic acids include acrylic and methacrylic acid, ethacrylic acid, alpha-chloracrylic acid, alpha-cyanoacrylic acid crotonic acid, beta-acryloxy propionic acid, and beta-styrl acrylic acid. Other ethylenically unsaturated monomers have been previously described herein. The copolymerized monomers for the acrylic component of the polyester-acrylic graft polymer comprises copolymerized monomers, on a weight basis between 1% and 100 of acrylic monomer, between 0% and 30% acrylic or methacrylic carboxylic acid monomer, with the balance being other ethylenically unsaturated monomers. Preferred acrylic components comprise between 20% and 90% acrylic monomer, between 5% and 15% carboxyl acid monomer, with the balance being other ethylenically unsaturated monomers. It should be noted that the carboxyl functionality can be part of the polyester polymer or part of the grafted acrylic polymer or on both polymers. The Acid No. of the polyester-acrylic graft polymer is preferably between about 20 and 100. The polyester-acrylic graft polymer preferably comprises by weight between 5% and 90% polyester polymer component and between 10% and 95% acrylic polymer component. The number average molecular weight of the polyester-acrylic graft polymer is between about 2,000 and 100,000 while preferred molecular weights are between 5,000 and 50,000 as measured by GPC. GPC chromatograms of the polyester and the grafted polyester-acrylic indicated that good grafting efficiency can be obtained.

Urethane ionomers can be produced with terminal carboxyl groups as well as terminal blocks, which can be crosslinked by zinc organic salts upon heating in accordance with this invention.

Carboxyl functional urethanes can be produced by coreacting diisocyanates with a diol or a polyol and a hydroxyl acid. Linear polyurethanes are obtained from difunctional reactants while branched polyurethanes are produced from the combination of difunctional and higher functional reactants. Urethanes can be prepared from any of several available aromatic, aliphatic, and cycloaliphatic diisocyanates and polyisocyanates. Suitable polyisocyanates can be di- or triisocyanates such as, for example, 2,4- and 2,6-tolylene diisocyanates, phenylene diisocyanate; hexamethylene or tetramethylene diisocyanates, 1,5-naphthalene diisocyanate ethylene or propylene diisocyanates. Trimethylene or triphenyl or triphenylsulfone triisocyanate, and similar di- or triisocyanates or mixtures thereof. The polyisocyanate can be generally selected from the group of aliphatic, cyclo-aliphatic and aromatic polyisocyanates such as for example hexamethylene 1,6-diisocyanate, isophorone diisocyanate, diisocyanate, 1,4-dimethyl cyclohexane, diphenylmethane diisocyanate 2,4-toluene diisocyanate, 2,6-toluene diisocyanate and mixtures thereof, polymethylene polyphenyl polyisocyanate, or isocyanate functional prepolymers.

A wide variety of diols and polyols can be used to prepare urethanes with a wide range of properties. Polyethers, such as the polytetramethylene oxides can be used to impart flexibility as well as the polyethylene oxides and polypropylene oxides. Simple diols that can be used include neopentyl glycol, 1,6-hexane diol, and longer chain diols having 12, 14 and higher carbon chains. Branching can be introduced with polyols such as trimethylol propane and pentaerythritol. Hydroxyl functional polyesters and various other hydroxyl functional polymers are also suitable. Useful polyols preferably contain two, three, or four hydroxyl groups for coreaction with the free isocyanate groups. Useful polyols are: -diols such as ethylene glycol, propylene glycols, butylene glycols, neopentyl glycol, 14-cyclohexane dimethanol, hydrogenated bisphenol A, etc.; triols such as glycerol, trimethylol propane, trimethylol ethane; tetrols such as pentaerythritol; hexols such as sorbitol, dipentaerythritol, etc.; polyether polyols produced by the addition of alkylene oxides to polyols; polycaprolactone polyols produced by @he addition of monomeric lactones to polyols, such as caprolactone; and hydroxyl terminated polyesters.

The polyurethane also contains a coreacted hydroxy-acid material. The hydroxy-acid contains at least one reactive hydroxy group for coreacting with the isocyanate during polymer synthesis and at least one carboxy group which is essentially non-reactive to the isocyanate groups during the polymer synthesis. Examples of alkyl acids are 2,2-dihydroxymethyl propionic acid, 2,2-dihydroxymethyl butyric acid, glycolic acid, and the like; other acids are lactic acid, 12-hydroxy stearic acid, the product of the Diels-Alder addition of sorbic acid to di-(2-hydroxyethyl) maleate or fumarate, or low molecular weight (300 to 600) precondensates of polyols with tribasic acids such as trimelletic anhydride or Ricinoleic acid. Acid functionality can be introduced with materials like 12-hydroxystearate, dimethylolpropionic acid, and various other hydroxy acids as well as carboxylated polyesters such as the Niax PWB-1200 (Union Carbide). Monohydroxyl acids will place the acid functionality at the end of the chain, while the diol acids will randomly place the acid groups in the chain. When isocyanates are reacted with diols and polyols of various types, the reaction rate may be enhanced by the use of catalysts. Common isocyanate catalysts are suitable and examples include dibutyltindilaurate, dibutyltinoxide, and the like.

The number average molecular weight of the urethane can be between 500 and 100,000 and preferably between 5,000 and 50,000 as measured by GPC.

In accordance with this invention, the useful level of neutralization of the carboxylic acid functional copolymer, is above 10% and preferably between 30% and 200% and most preferably between 50% and 150% neutralization. Neutralization with a basic sodium composition, such as sodium hydroxide, is preferred, so that the ionomer contains sodium ions as the cationic component.

Useful ionomers include those available under the trademarks ACLYN 260 to 286 and 260A to 286A, which are ethyleneacrylic and sodium ionomers, with molecular weights of over 1200. These ionomers are available with Ca, Mg, Na, and Zn cations. Especially preferred is ACLYN 276A.

### THE INKS

The dispersed pigment may be added to an ink vehicle, such as a vehicle typically used for lithographic (direct and offset), letterpress, gravure, flexographic, silk-screen, or mimeograph printing processes, or vehicles used to form curable inks, such as infrared, ultraviolet and electron beam (E.B.) curable inks, to form a printing ink. Generally the pigments will be present in an amount from about 1 to about 90 percent, preferably from about 40 to about 85, and most preferably from about 50 to about 80 percent, based on the total weight of the ink. Any suitable ink vehicle may be used. Although the full advantage of the present ink formulations is achieved only if the vehicle is substantially free of volatile organic solvent, other benefits will be result even if such volatile components are present. As used herein the term volatile organic solvent is meant to indicate such solvents that are vapors at temperatures above about 120°C. In one embodiment the ink vehicle will include one or more vegetable oils, as defined previously, especially a soya oil. In another embodiment the ink vehicle will comprise naphthenic oil, as in combination with an unsaturated component, as discussed previously.

One ink vehicle that is preferred is a vehicle made from 16-V-10 varnish (Sun Chemical), varnish #4895 (100% solid varnish made from hydrocarbon resin, Superior Varnish), varnish #6948 (100% solid soya gel varnish, Superior Varnish Co.). The mixture may be allowed to mix, as by using a SCHOLD mixer, for mixing time from about 1 to about 4, preferably from about 1 to about 2 hours. Such inks exhibit excellent transfer, very fast drying, high signal strength at thinner ink film, long run stability without emission of any hazardous solvent, and produce high quality prints.

### THE DISPERSION METHOD

According to the present invention particles of the specified size, such as a magnetic powder, preferably untreated, hydrophilic cubic iron oxide (black magnetic ink pigment trade code 031181 from Wright Industries Inc.) are dispersed into a melt comprised of shell wall former materials, a dispersing oil, and the like, as by the aid of a SCHOLD mixer. The melt preferably contains an oil, preferably a soybean oil (Kerely Ink), a binder resin, preferably a maleic modified rosin ester (trademark Beckacite 4503 resin from Arizona chemical company), a particle surface modifier, preferably an oxidized homopolymer polyethylene gel (AC629A polyethylene from Allied-Signal Inc.) and optionally an ionomer, preferably an ethylene acrylic acid ionomer, preferably sodium ionomer (trademark Aclyn A 276 from Allied signal).

The melt components are heated to a temperature just above their softening point (i.e. 140-150°C). The heating is accompanied with constant mixing until all the ingredients are melted and dissolved in the carrier, such as soybean oil. At this stage the particles, such as iron oxide pigment, are continuously added to the hot melt while maintaining constant mixing. The residence time of the particles and the melt in the mixer is sufficient to obtain a homogeneous, uniform dispersion of the particles in the melt. After sufficient uniformity of dispersion of the particles is achieved, the resultant dispersion is combined with a suitable vehicle and any optional components, without the need for an intermediate solidification. The dispersion may, however, be cooled prior to addition of the vehicle.

A similar method was used to encapsulate colorants and carbon black.

The weight percentages of the melt components and particles are generally in the following ranges:

| | |
|---|---|
| Oil | from 10 to 90 |
| Preferably | from 5 to 75 |
| Most Preferably | from 10 to 55 |
| Resins | from 0 to 50 |
| Preferably | from 1 to 35 |
| Most Preferably | from 2 to 20 |
| Particle surface modifier | from 0.1 to 25 |
| Preferably | from 0.1 to 15 |
| Most Preferably | from 0.2 to 10 |
| Ionomer | from 0 to 20 |
| Preferably | from 0.1 to 15 |
| Most Preferably | from 0.1 to 10 |
| Core Materials | from 1 to 90 |
| Preferably | from 5 to 85 |
| Most Preferably | from 10 to 80 |
| Dye | from 0 to 15 |
| Preferably | from 0.5 to 10 |
| Most Preferably | from 1 to 6 |

Typically, then, the melt components will comprise from about 10 to about 80 percent of the particles. All of the foregoing percentages are by weight, based on the total weight of the particles.

### DESCRIPTION OF THE APPARATUS

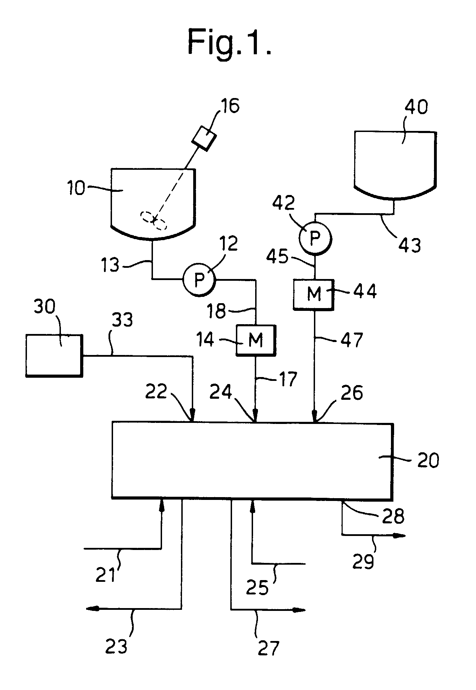

The method of the present invention can be performed with various equipment in various configurations. Fig. 1 is exemplary of the apparatus that may be used in accordance with the present invention.

As shown in Fig. 1, a mixing tank 10 is provided for making the initial melt. The tank is heated by any suitable means, to melt the components, such as polymer, binding resin and the like to dissolve the same in the oil of choice. Typically the oil is heated to a temperature of about 275 - 325° F. The mixing tank is also provided with suitable mixing means 16 to achieve proper mixing and dissolution of the components of the melt.

The mixing tank 10 is in fluid communication with an inline mixer 20. Fluid from the mixing tank is fed to the inline mixer by pump 12 that communicates with the mixing tank 10 via conduit 13. Fluid from the pump 12 passes through meter 14 via conduit 15, then to the inline mixer via conduit 17, entering the inline mixer 20 via inlet 24. The fluid flow is measured by meter 14 which through appropriate control means (not shown) regulates the fluid flow to the inline mixer by control of the speed of pump 12.

Vessel 30 also is in communication with inline mixer 20. Particles (pigment, magnetic, carbon, or the like) are stored in vessel 30 and then fed to the inline mixer via conduit 33 to inlet 22 on the inline mixer. The flow of the particles is measured by loss of weight or loss of volume and through appropriate control means (not shown) the flow to the inline mixer is controlled.

The flow of melt from tank 10 and the flow of particles from vessel 30 are closely controlled to maintain a predetermined weight ratio of the melt to the particles flowing to the inline mixer. The melt and particles are mixed within the inline mixer at a region that is capable of being heated by circulation of a heated fluid, such as hot oil or steam, supplied via conduits 21 and 23. During the mixing of the particles with the melt, the temperature of the melt is maintained so that the melt remains in a liquid state. The residence time of the melt and particles in the first mixing region is sufficient to obtain a uniform dispersion of the particles in the melt. The dispersion then passes internally in the mixer to a second mixing region that is provided with means for cooling, by circulating a cooling fluid such as water, supplied via conduits 25 and 27.

In the second mixing region the dispersion of the particles in the melt is combined with a suitable ink vehicle, such as a varnish, along with any additives that may be dissolved in the vehicle. The vehicle is maintained in a storage tank 40 which is in fluid communication with the inline mixer 20. Fluid from the tank 40 is fed to the inline mixer by pump 42 that communicates with the mixing tank 40 via conduit 43. Fluid from the pump 42 passes through meter 44 via conduit 45, then to the inline mixer via conduit 47, entering the inline mixer 20 via inlet 26. The fluid flow is measured by meter 44 which through appropriate control means (not shown) regulates the fluid flow to the inline mixer by control of the speed of pump 42. The fluid flow of the vehicle is maintained at a level that provides the desired concentration of pigment in the finished ink. The residence time of the dispersion and vehicle in the second mixing region is sufficient to obtain a uniform dispersion of the particles in the vehicle. The finished ink product then passes from the mixer outlet to conduit 29 from which it can be further treated, packaged, or the like.

Depending upon the end use of the ink and the formulation of the melt and the like, it may not be necessary to add additional vehicle in all instances.

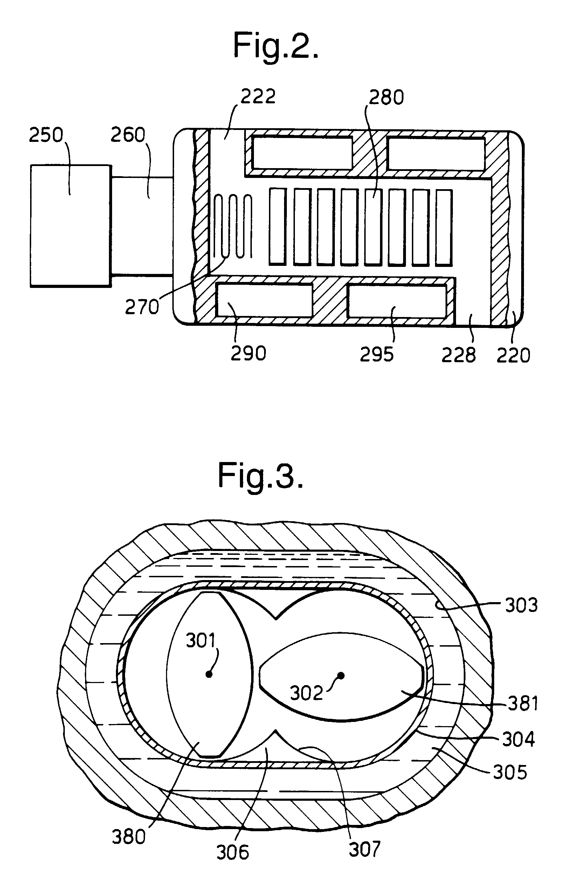

For purposes of mixing the particles with the melt and forming the final ink, its is preferable to use as the in line mixer a Teledyne Readco Continuous Processor. The unit has a twin screw design, providing co-rotating shafts, with close clearances between the paddles themselves and between each of the paddles and the inside wall of the processor. A transverse-section of the interior of the processor is shown in Fig. 2 and a cross-section is shown in Fig. 3.

The Teledyne Readco Continuous Processor is made, in general, in accordance with U.S. Patent Nos. 3,490,750 and 3,618,902. The clearance between the two rotating paddles and between each of the paddles and the interior chamber wall is, however, approximately the same. That clearance is typically from about 0.060 to about 0.080 inches. In operation, the Processor exerts a high sheer on any fluid being processed in the Processor, while concurrently and continuously extruding that fluid. Such action is achieved by distributive mixing, caused by the fluid in the mixer being continuously forced from regions of high pressure to regions of low pressure, developed by the interrelationship between the rotating paddles in the Processor, while at the same time providing areas of minimal clearance through which the fluid in the processor must flow, to pass from such regions of high pressure to the regions of low pressure. The fluid passing through these areas of minimal clearance have great sheer imparted thereto. These interrelated phenomena are described in more detail in the aforementioned U.S. Patent Nos. 3,490,750 and 3,618,902.

In Fig. 2, the inline mixer 22 is shown with the associated electric motor 250 and transmission 260, which is connected to the auger 270 and cams 280. Raw material is introduced through input port 222 and exits through exit port 228. Heating chamber 290 provides a means for heating the first mixing region and cooling chamber 295 provides a means for cooling the second mixing region. Inlet ports, not shown are provided along the length of the mixer.

In Fig. 3, the configuration of the co-rotating shafts 301 and 302 are shown, with the attached cams 380 and 381. The outside jacket wall 303 with the inside jacket wall 304 form an interstitial space 305 in which heating or cooling fluid can reside. Inside vessel wall 307 forms a close clearance with cams 380 and 381.

In operation, pressure may be applied to the feed side of the fluid in the Processor to increase the throughput, if desired. Alternatively, vacuum may be used at the product side of the Processor, also to increase throughput. The use of vacuum can also allow the Processor to be operated at a lower temperature, which may be desirable if unstable particles are to be dispersed, such as organic pigments.

The present invention also provides a means for making inks by encapsulating the desired pigment or carbon black in accordance with the present invention, then dispersing the encapsulated pigment or carbon black in the desired vehicle. The vehicle may be one suitable for lithographic, letterpress, gravure, or flexographic printing, or for use as a radiation curable ink. By use of the encapsulated pigments and carbon blacks of the present invention, particle agglomeration is effectively eliminated.

Because the encapsulated pigment or carbon black has a strong affinity for the ink vehicles (varnishes), the encapsulated particles are easily dispersed into the desired vehicle, to form agglomerate-free printing inks. Because of the high affinity of the encapsulated particles with respect to the ink vehicles, it is possible to achieve very high pigment loadings, such as up to 90 percent, by weight. Such is in sharp contrast to the flushing process of the prior art in which a presscake of colorants is dispersed in an oleoresinous binder, using a mechanical aid, such as a three roll mill. The process requires the complicated use of hydrocarbon solvents, grinding vehicles, surfactants, and varnishes. Auxiliary driers and/or energy is often required, depending upon the flush and ink vehicles. The resultant compositions are very viscous and difficult to handle, even though the pigment loading is relatively low, usually not above 50 to 55 percent. All such problems are eliminated by use of the present invention.

The invention will be further illustrated in terms of the following nonlimiting examples.

### EXAMPLES 1-8

A Teledyne Readco 5" Processor was used to make dispersions of magnetic particles in soy oil (Examples 1-4) and to make dispersions of carbon black in soy oil (Examples 5-8).

In each of the Examples, the soy oil was first mixed with to form a dispersion melt comprised of 60 parts of soy oil, 18 parts of XR4503, 4 parts of AC629 and 2 parts of Aclyn 276, all parts being parts by weight. By use of the Processor, 7 parts of alkali blue and 360 parts of iron oxide were dispersed into the melt.

The processing conditions for each of the Examples are shown in Table I and Table II.

For each of Examples 1-5 and 8, the rpm of the processor was set to 100. For Examples 6 and 7, the rpm was set to 250. The hot oil flow to the heated region was approximately 10 gallons per hour.

**TABLE I**

| EXAMPLE | Fe₂O₃ lbs./Kg per hour | Soy Oil lbs. per hour/Kg | Soy Oil Temp.(°F) (°C) | Product Temp (°F) (°C) | Jacket(°C) Temp (°F) 1st Region | Jacket (°C) Temp. (°F) 2nd Region |
|---|---|---|---|---|---|---|
| 1 | 408/185 | 102/46 | 330 (165) | 175 (79) | (151/153) 305/308 | (4/6) 39/43 |
| 2 | 409/185 | 102/46 | 338 (170) | 160 (71) | (156/156) 313/314 | (4/6) 40/43 |
| 3 | 815/369 | 204/92 | 340 (171) | 185 (85) | (153/155) 308/311 | (4/6) 39/43 |
| 4 | 1356/615 | 339/154 | 335 (168) | 189 (87) | (148/149) 298/300 | (4/6) 39/43 |

**TABLE II**

| EXAMPLE | Carbon black lbs. (Kg) per hr. | Soy Oil lbs. per hour (Kg) | Soy Oil Temp. (°F)/°C | Product Temp.(°F)/°C | Jacket (°C) Temp.(°F) 1st Region | Jacket Temp.(°C) (°F) 2nd Region |
|---|---|---|---|---|---|---|
| 5 | 252/114 | 240/109 | | 218/103 | (146/147) 295/296 | (6/9) 43/49 |
| 6 | 252/114 | 240/109 | 331/166 | 260/126 | (145/145) 294/294 | (6/10) 43/50 |
| 7 | 252/114 | 240/109 | 346/174 | 275/135 | (124/123) 256/254 | (6/9) 43/48 |
| 8 | 252/114 | 240/109 | | 240/115 | | |

The end products produced by the foregoing Examples were examined by use of a particle size analyzer and were found to have excellent particle size distribution within a narrow range. Inks were successfully produced from the products of these examples

## Claims

1. A method of making an ink comprising dispersing particles selected from the group consisting of magnetic particles, inorganic pigments, organic pigments and carbon black in a heated liquid medium and after forming the dispersion, continuously adding an ink vehicle to the dispersion to form the ink, without the need to form a solid intermediate of the dispersion.

2. A method as claimed in claim 1 wherein said heated liquid medium is free of volatile organic solvents and includes an oil.

3. A method as claimed in claim 2 wherein the heated liquid medium further comprises a particle surface modifier, said liquid medium being present in an amount from 10 to 80 percent, based on the total weight of the encapsulated product.

4. A method as claimed in claim 3 wherein the liquid medium comprises a binder resin.

5. A method as claimed in claim 3 or 4 wherein the liquid medium comprises an ionomer.

6. A method as claimed in claim 2, 3, 4 or 5 wherein the oil is a vegetable oil.

7. A method as claimed in claim 6 wherein the vegetable oil is soya oil.

8. A method for making an ink comprising particles selected from the group consisting of magnetic particles, pigments, and carbon black, having a particle diameter from 0.04 to 100 microns, said method comprising forming a melt comprising an oil and a particle surface modifier; continuously supplying said melt and said particles, at a predetermined weight ratio, to a first region of a mixing chamber wherein said melt is maintained as a fluid at an elevated temperature; mixing said particles together with said melt in said first region of the mixing chamber to form a uniform dispersion of said particles in said melt; after forming such a dispersion, maintaining said dispersion in a fluid state while feeding said dispersion to a second region of said mixing chamber; continuously adding an ink vehicle to said dispersion without allowing said dispersion to solidify; and mixing the dispersion and the vehicle to form the ink; said melt being present in an amount from 10 to 90 percent, based on the total weight of the particles.

9. A method as claimed in claim 8 wherein said melt is free of volatile organic solvents.

10. A method as claimed in claim 8 or claim 9 wherein the magnetic particle diameter is from 0.7 to 1 micron.

11. A method as claimed in claim 8 or claim 9 or claim 10 wherein said oil is a vegetable oil.

12. A method as claimed in any one of claims 8 to 11 wherein the melt comprises a binder resin.

13. A method as claimed in claim 12 wherein said binder resin is selected from the group consisting of vinyl chloride/vinyl acetate copolymers, vinyl chloride/vinyl acetate/vinyl alcohol polymers, vinyl chloride/vinylidene chloride copolymers, polyurethane resins, polyester resins, acrylonitrile/butadiene copolymers, nitrocellulose, cellulose acetate butyrate, epoxy resins, and acrylic resins.

14. A method as claimed in any one of claims 8 to 13 wherein said ink vehicle is a lithographic printing ink vehicle, letterpress printing ink vehicle, gravure printing ink vehicle, flexographic printing ink vehicle, or radiation curable ink ink vehicle.

15. A method as claimed in any one of claims 8 to 14 wherein the melt comprises an ionomer.

16. A method of making a dispersion of particles selected from the group consisting of magnetic particles, inorganic pigments, organic pigments, and carbon black, in a liquid carrier comprising continuously subjecting said dispersion to high sheer forces to deagglomerate the particles, while concurrently extruding the dispersion from regions of high pressure to regions of lower pressure, until a dispersion is obtained that has a narrow distribution of particle sizes, with the particles being uniformly distributed throughout the carrier.

17. A method as claimed in claim 16 wherein said dispersion comprises particles having a particle diameter from 0.04 to 100 microns, wherein said method also comprises first forming a melt comprising an oil and a particle surface modifier, then forming a dispersion by continuously supplying said melt and said particles, at a predetermined weight ratio, to a first region of a mixing chamber wherein said melt is maintained as a fluid at an elevated temperature.

18. A method for making a dispersion in a liquid carrier, said dispersion comprising particles selected from the group consisting of magnetic particles, pigments, and carbon black, having a particle diameter from 0.04 to 100 microns, said method comprising first forming a solution, suspension or emulsion of a carrier and a particle surface modifier, then forming a dispersion of said particles in said carrier by continuously supplying said solution, suspension or emulsion and said particles, at a predetermined weight ratio, to a first region of a mixing chamber, and subsequently continuously subjecting said dispersion to high sheer forces to deagglomerate the particles, while concurrently extruding the dispersion from regions of high pressure to regions of lower pressure, until a final dispersion is obtained that has a narrow distribution of particle sizes, with the particles being uniformly distributed throughout the carrier.

19. A method of making an ink from the final dispersion as claimed in claim 18, the method comprising maintaining said dispersion in a fluid state while feeding the same to a second region of said mixing chamber and subsequently adding a suitable ink vehicle continuously to said dispersion without allowing said dispersion to solidify, followed by mixing the dispersion and the vehicle to form the ink.

20. A method as claimed in claim 19 wherein said ink is free of volatile organic solvents.

21. A method as claimed in claim 18, 19 or 20 wherein the carrier is present in an amount from 10 to 90 percent, based on the total weight of the particles.

## Patentansprüche

1. Verfahren zur Herstellung einer Tinte oder Druckfarbe, bei dem Teilchen aus der Gruppe Magnetteilchen, anorganische Pigmente, organische Pigmente und Ruß in einem erhitzten flüssigen Medium dispergiert werden und nach Bildung der Dispersion kontinuierlich ein Tinten- oder Druckfarbenbindemittel zu der Dispersion gegeben wird unter Bildung der Tinte oder Druckfarbe, ohne daß ein festes Zwischenprodukt der Dispersion gebildet werden muß.

2. Verfahren nach Anspruch 1, bei dem das erhitzte flüssige Medium von flüchtigen organischen Lösemitteln frei ist und ein Öl enthält.

3. Verfahren nach Anspruch 2, bei dem das erhitzte flüssige Medium außerdem ein Mittel zum Modifizieren der Teilchenoberfläche enthält, wobei das flüssige Medium in einer Menge von 10 bis 80 Prozent vorliegt, bezogen auf das Gesamtgewicht des eingekapselten Produkts.

4. Verfahren nach Anspruch 3, bei dem das flüssige Medium ein Bindemittelharz enthält.

5. Verfahren nach Anspruch 3 oder 4, bei dem das flüssige Medium ein Ionomer enthält.

6. Verfahren nach Anspruch 2, 3, 4 oder 5, bei dem das Öl ein Pflanzenöl ist.

7. Verfahren nach Anspruch 6, bei dem das Pflanzenöl Sojaöl ist.

8. Verfahren zur Herstellung einer Tinte oder Druckfarbe, die Teilchen aus der Gruppe Magnetteilchen, Pigmente und Ruß mit einem Teilchendurchmesser von 0,04 bis 100 Mikrometern enthält, bei dem eine schmelze gebildet wird, die ein Öl und ein Mittel zum Modifizieren der Teilchen oberfläche enthält: die Schmelze und die Teilchen in einem vorbestimmten Gewichtsverhältnis kontinuierlich einem ersten Bereich einer Mischkammer zugeführt werden, in der die Schmelze bei einer erhöhten Temperatur flüssig gehalten wird; die Teilchen zusammen mit der Schmelze in dem ersten Bereich der Mischkammer gemischt werden unter Bildung einer gleichförmigen Dispersion der Teilchen in der Schmelze; nach Bildung einer Dispersion diese Dispersion in einem flüssigen Zustand gehalten wird, während die Dispersion einem zweiten Bereich der Mischkammer zugeführt wird; ein Tinten- oder Druckfarbenbindemittel kontinuierlich der Dispersion zugesetzt wird, ohne daß man die Dispersion fest werden läßt; und die Dispersion und das Bindemittel gemischt werden unter Bildung der Tinte oder Druckfarbe; wobei die Schmelze in einer Menge von 10 bis 90 Prozent vorliegt, bezogen auf das Gesamtgewicht der Teilchen.

9. Verfahren nach Anspruch 8, bei dem die Schmelze frei von flüchtigen organischen Lösemitteln ist.

10. Verfahren nach Anspruch 8 oder Anspruch 9, bei dem der Durchmesser der Magnetteilchen 0,7 bis 1 Mikrometer beträgt.

11. Verfahren nach Anspruch 8 oder Anspruch 9 oder Anspruch 10, bei dem das Öl ein Pflanzenöl ist.

12. Verfahren nach einem der Ansprüche 8 bis 11, bei dem die Schmelze ein Bindemittelharz enthält.

13. Verfahren nach Anspruch 12, bei dem das Bindemittelharz aus der Gruppe Vinylchlorid-Vinylacetat-Copolymer, Vinylchlorid-Vinylacetat-Vinylalkohol-Polymere, Vinylchlorid-Vinylidenchlorid-Copolymere, Polyurethanharze, Polyesterharze, Acrylnitril-Butadien-Copolymere, Nitrocellulose, Celluloseacetatbutyrat, Epoxyharze und Acrylharze ausgewählt ist.

14. Verfahren nach einem der Ansprüche 8 bis 13, bei dem das Druckfarbenbindemittel eines für lithographischen Druck, Buchdruck, Gravüredruck, flexograpfischen Druck oder durch Strahlung härtbare Druckfarbe ist.

15. Verfahren nach einem der Ansprüche 8 bis 14, bei dem die Schmelze ein Ionomer enthält.

16. Verfahren zur Herstellung einer Dispersion von Teilchen aus der Gruppe Magnetteilchen, anorganische Pigmente, organische Pigmente und Ruß in einem flüssigen Träger, bei dem die Dispersion kontinuierlich hohen Scherkräften ausgesetzt wird, um die Teilchen zu deagglomerieren, während damit einhergehend die Dispersion von Bereichen hohen Drucks zu Bereichen niedrigen Drucks extrudiert wird, bis eine Dispersion erhalten wird, die eine enge Teilchengrößeverteilung hat mit Teilchen, die im gesamten Träger gleichmäßig verteilt sind.

17. Verfahren nach Anspruch 16, bei dem die Dispersion Teilchen mit einem Teilchendurchmesser von 0,04 bis 100 Mikrometern enthält und bei dem zuerst eine Schmelze gebildet wird, die ein Öl und ein Mittel zum Modifizieren der Teilchenoberfläche enthält, dann eine Dispersion gebildet wird, indem die Schmelze und die Teilchen in einem vorbestimmten Gewichtsverhältnis kontinuierlich einem ersten Bereich einer Mischkammer zugeführt werden, in der die Schmelze bei einer erhöhten Temperatur flüssig gehalten wird.

18. Verfahren zur Herstellung einer Dispersion in einem flüssigen Träger, wobei die Dispersion Teilchen aus der Gruppe Magnetteilchen, Pigmente und Ruß mit einem Teilchendurchmesser von 0,04 bis 100 Mikrometern enthält, bei dem zuerst eine Lösung, Suspension oder Emulsion eines Trägers und eines Mittels zum Modifizieren der Teilchenoberfläche gebildet wird, dann eine Dispersion der Teilchen in dem Träger gebildet wird, indem die Lösung, Suspension oder Emulsion und die Teilchen in einem vorbestimmten Gewichtsverhältnis kontinuierlich einem ersten Bereich einer Mischkammer zugeführt werden, und anschließend die Dispersion kontinuierlich hohen Scherkräften ausgesetzt wird, um die Teilchen zu deagglomerieren, während damit einhergehend die Dispersion von Bereichen hohen Drucks zu Bereichen niedrigen Drucks extrudiert wird, bis eine Enddispersion erhalten wird, die eine enge Teilchengrößeverteilung hat mit Teilchen, die im gesamten Träger gleichmäßig verteilt sind.

19. Verfahren zur Herstellung einer Tinte oder Druckfarbe aus der Enddispersion nach Anspruch 18, bei dem die Dispersion in einem flüssigen Zustand gehalten wird, während sie zu einem zweiten Bereich der Mischkammer gefördert wird, und anschließend ein geeignetes Tinten- oder Druckfarbenbindemittel kontinuierlich der Dispersion zugesetzt wird, ohne daß man die Dispersion fest werden läßt, gefolgt von einem Mischen der Dispersion und des Bindemittels unter Bildung der Tinte oder Druckfarbe.

20. Verfahren nach Anspruch 19, bei dem die Tinte oder Druckfarbe frei von flüchtigen organischen Lösemitteln ist.

21. Verfahren nach Anspruch 18, 19 oder 20, bei dem der Träger in einer Menge von 10 bis 90 Prozent, bezogen auf das Gesamtgewicht der Teilchen, vorliegt.

## Revendications

1. Méthode de fabrication d'une encre comprenant la dispersion de particules choisies dans le groupe constitué par des particules magnétiques, des pigments minéraux, des pigments organiques et du noir de carbone dans un milieu liquide chauffé et, après réalisation de la dispersion, l'addition en continu d'un véhicule d'encre à la dispersion pour former l'encre, sans qu'il soit nécessaire de former un intermédiaire solide de la dispersion.

2. Méthode selon la revendication 1, dans laquelle ledit milieu liquide chauffé est exempt de solvants organiques volatils et inclut une huile.

3. Méthode selon la revendication 2, dans laquelle le milieu liquide chauffé comprend en outre un agent de modification de la surface des particules, ledit milieu liquide étant présent en une quantité située entre 10 et 80 %, par rapport à la masse totale de produit encapsulé.

4. Méthode selon la revendication 3, dans laquelle le milieu liquide comprend une résine liante.

5. Méthode selon la revendication 3 ou 4, dans laquelle le milieu liquide comprend un ionomère.

6. Méthode selon la revendication 2, 3, 4 ou 5, dans laquelle l'huile est une huile végétale.

7. Méthode selon la revendication 6, dans laquelle l'huile végétale est de l'huile de soja.

8. Méthode de fabrication d'une encre comprenant des particules choisies dans le groupe constitué par des particules magnétiques, des pigments et du noir de carbone, ayant des particules d'un diamètre compris entre 0,04 et 100 microns, ladite méthode comprenant la formation d'une phase fondue comprenant une huile et un agent de modification de la surface des particules ; l'apport continu de ladite phase fondue et desdites particules, dans un rapport pondéral défini au préalable, dans une première région d'une chambre de mélange dans laquelle ladite phase fondue est maintenue à l'état liquide à une température élevée ; le mélange desdites particules avec ladite phase fondue dans ladite première région de la chambre de mélange pour former une dispersion uniforme desdites particules dans ladite phase fondue; après formation d'une telle dispersion, le maintien de ladite dispersion dans un état fluide tout en admettant ladite dispersion dans une seconde région de ladite chambre de mélange ; l'addition continue d'un véhicule d'encre à ladite dispersion sans laisser ladite dispersion se solidifier; et le mélange de la dispersion et du véhicule pour former l'encre, ladite phase fondue étant présente en une quantité de 10 à 90 % par rapport à la masse totale des particules.

9. Méthode selon la revendication 8, dans laquelle ladite phase fondue est exempte de solvants organiques volatils.

10. Méthode selon la revendication 8 ou la revendication 9, dans laquelle le diamètre des particules magnétiques se situe entre 0,7 et 1 micron.

11. Méthode selon la revendication 8 ou la revendication 9 ou la revendication 10, dans laquelle ladite huile est une huile végétale.

12. Méthode selon une quelconque des revendications 8 à 11, dans laquelle la phase fondue comprend une résine liante.

13. Méthode selon la revendication 12, dans laquelle ladite résine liante est choisie dans le groupe constitué par les copolymères chlorure de vinyle/acétate de vinyle, les polymères chlorure de vinyle/acétate de vinyle/alcool vinylique, les copolymères chlorure de vinyle/chlorure de vinylidène, les résines polyuréthannes, les résines polyesters, les copolymères acrylonitrile/butadiène, la nitrocellulose, l'acétate butyrate de cellulose, les résines époxy et les résines acryliques.

14. Méthode selon une quelconque des revendications 8 à 13, dans laquelle ledit véhicule de l'encre est un véhicule d'encre d'impression lithographique, un véhicule d'encre d'impression typographique, un véhicule d'encre d'impression pour gravure, un véhicule d'encre d'impression flexographique ou un véhicule d'encre durcissant sous l'effet d'un rayonnement.

15. Méthode selon une quelconque des revendications 8 à 14, dans laquelle la phase fondue comprend un ionomère.

16. Méthode de fabrication d'une dispersion de particules choisies dans le groupe constitué par des particules magnétiques, des pigments minéraux, des pigments organiques et du noir de carbone, dans un support liquide, comprenant la soumission continue de ladite dispersion à des forces de cisaillement élevées pour supprimer les agglomérats de particules, tout en extrudant dans le même temps la dispersion de régions à haute pression vers des régions à pression inférieure, jusqu'à obtention d'une dispersion ayant une distribution granulométrique étroite, les particules étant distribuées uniformément dans le support.

17. Méthode selon la revendication 16, dans laquelle ladite dispersion comprend des particules d'un diamètre compris entre 0,04 et 100 microns, ladite méthode comprenant également d'abord la formation d'une phase fondue comprenant une huile et un agent de modification de la surface des particules, puis la formation d'une dispersion par apport continu de ladite phase fondue et desdites particules, dans un rapport pondéral défini au préalable, dans une première région d'une chambre de mélange dans laquelle ladite phase fondue est maintenue à l'état liquide à une température élevée.

18. Méthode de fabrication d'une dispersion, dans un support liquide, ladite dispersion comprenant des particules choisies dans le groupe constitué par des particules magnétiques, des pigments et du noir de carbone, ayant des particules d'un diamètre compris entre 0,04 et 100 microns, ladite méthode comprenant d'abord la formation d'une solution, d'une suspension ou d'une émulsion comprenant un support et un agent de modification de la surface des particules, puis la formation d'une dispersion desdites particules dans ledit support par apport continu de ladite solution, de ladite suspension ou de ladite émulsion et desdites particules, dans un rapport pondéral défini au préalable, dans une première région d'une chambre de mélange, et ensuite la soumission continue de ladite dispersion à des forces de cisaillement élevées pour supprimer les agglomérats de particules, tout en extrudant dans le même temps la dispersion de régions à haute pression vers des régions à pression inférieure, jusqu'à obtention d'une dispersion finale ayant une distribution granulométrique étroite, les particules étant distribuées uniformément dans le support.

19. Méthode de fabrication d'une encre à partir d'une dispersion finale selon la revendication 18, la méthode comprenant le maintien de ladite dispersion à l'état liquide et en même temps son admission dans une seconde région de ladite chambre de mélange, puis l'addition en continu d'un véhicule d'encre approprié à ladite dispersion sans laisser ladite dispersion se solidifier, opération suivie du mélange de la dispersion et du véhicule pour former l'encre.

20. Méthode selon la revendication 19, dans laquelle ladite encre est exempte de solvants organiques volatils.

21. Méthode selon la revendication 18, 19 ou 20, dans laquelle le support est présent dans une quantité entre 10 et 90 %, par rapport à la masse totale des particules.
